# EUROPEAN PATENT APPLICATION

(11) **EP 4 568 365 A1**
(43) Date of publication of application: **11.06.2025**
(21) Application number: 23863324.2
(22) Date of filing: 14.07.2023
(51) Int. Cl.: H04W 52/22, H04W 52/28, H04W 52/36, H04B 1/3827, H04W 52/30

(54) **ELECTRONIC DEVICE AND TAS CONTROL METHOD**

(30) Priority: 08.09.2022 KR 20220114416; 02.11.2022 KR 20220144691
(71) Applicant: Samsung Electronics Co., Ltd., Suwon-si, Gyeonggi-do 16677 (KR)
(72) Inventor: CHOI, Junsu, Suwon-si, Gyeonggi-do 16677 (KR)
(74) Representative: Walaski, Jan Filip
(86) International application number: PCT/KR2023/010133
(87) International publication number: WO 2024/053843

(57) **Abstract**

An electronic device, according to one embodiment, comprises: a plurality of communication processors which include a first communication processor and a second communication processor and are configured to transmit/receive wireless signals; and a processor operatively connected to the plurality of communication processors. The electronic device carries out a plurality of operations, and the plurality of operations may include an operation for acquiring a transmit power history of the second communication processor at a time point of state change of the first communication processor. The plurality of operations may include an operation for, on the basis of the transmit power history, determining a transient TAS backoff regulation value of the first communication processor, for a time window associated with the time point of state change. Other embodiments are possible.

## Description

### TECHNICAL FIELD

The embodiments of the present disclosure relate to an electronic device and a time-averaged specific absorption rate (SAR) (TAS) control method.

### BACKGROUND ART

With the advent of an electronic device such as a smartphone, a tablet personal computer (PC), and a laptop, the demand for high-speed wireless connectivity has exploded. These trends and the growing demand for high-speed wireless connectivity have firmly established the Institute of Electrical and Electronic Engineers (IEEE) 802.11 wireless communication standard as a representative and universal high-speed wireless communication standard in the information technology (IT) industry. Early wireless local area network (WLAN) technology developed around 1997 could support transmission speeds of up to 1 to 2 megabits per second (Mbps). Since then, based on the demand for faster wireless connectivity, WLAN technology has steadily developed, including new WLAN technology that improves transmission speeds, such as IEEE 802.11n, 802.11ac, and 802.11ax. The current latest standard, IEEE 802.11 ax, has the maximum transmission speed of several gigabits per second (Gbps).

Today, a WLAN provides a high-speed wireless connection to users in various public places such as an office, an airport, a stadium, and a station, in addition to a private place such as a home. Accordingly, a WLAN has greatly influenced people's lifestyles and culture and has become a lifestyle in modern life.

Recently, a smart mobile device has been providing various functions and services to differentiate the user experience, and accordingly, a smart mobile device is equipped with a communication processor supporting more and more connection services. Typically, a communication processor supporting a cellular network (e.g., 5th generation (5G) and long-term evolution (LTE)) supports an Internet connection service. In addition, an Internet connection is possible wherever a wireless router is installed through a communication processor (e.g., a wireless fidelity (Wi-Fi) chipset) supporting Wi-Fi. A smart mobile device may also support an earphones connection, a headset connection, and a vehicle infotainment system through Bluetooth. A smart mobile device supports a service, such as high-precision positioning, through ultra-wideband (UWB) that has recently been installed.

### DISCLOSURE OF THE INVENTION

### TECHNICAL SOLUTIONS

According to an embodiment, an electronic device includes a plurality of communication processors including a first communication processor and a second communication processor and configured to transmit and receive a wireless signal. The electronic device includes a processor operatively connected to the plurality of communication processors, in which the electronic device is configured to perform a plurality of operations. The plurality of operations includes obtaining a transmission power history of the second communication processor at a time point of a state change of the first communication processor. The plurality of operations includes determining, based on the transmission power history, a transient time-averaged specific absorption rate (SAR) (TAS) backoff regulation value of the first communication processor for a time window associated with the time point of the state change.

According to an embodiment, an operating method of an electronic device includes obtaining a transmission power history of a second communication processor at a time point of a state change of a first communication processor. The operating method may include determining, based on the transmission power history, a transient TAS backoff regulation value for a time window including the time point of the state change.

According to an embodiment, an electronic device includes a plurality of communication processors including a first communication processor and a second communication processor and configured to transmit and receive a wireless signal. The electronic device includes a processor operatively connected to the plurality of communication processors, in which the electronic device is configured to perform a plurality of operations. The plurality of operations includes controlling transmission power of an antenna associated with the first communication processor at a time point of a state change of the first communication processor, based on a transmission power history or maximum energy usage of the second communication processor. The electronic device is configured to control the transmission power of the antenna to satisfy an SAR standard.

### BRIEF DESCRIPTION OF DRAWINGS

FIG. 1 illustrates an example of a wireless local area network (WLAN) system, according to an embodiment.
FIG. 2 illustrates another example of a WLAN system, according to an embodiment.
FIG. 3 is a diagram illustrating an example of a link setup operation, according to an embodiment.
FIGS. 4A and 4B are diagrams illustrating a specific absorption rate (SAR) backoff control method, according to an embodiment.
FIG. 5 is a diagram illustrating an example of a time-averaged SAR (TAS) backoff control method.
FIGS. 6A and 6B are diagrams illustrating examples of a TAS backoff control method.
FIG. 7 illustrates an example of a schematic block diagram of a station (STA), according to an embodiment.
FIGS. 8A and 8B are diagrams illustrating examples of a TAS backoff control method performed by an STA, according to an embodiment.
FIGS. 9A and 9B are flowcharts illustrating an operating method of an STA, according to an embodiment.
FIG. 10 is a block diagram of an electronic device in a network environment, according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

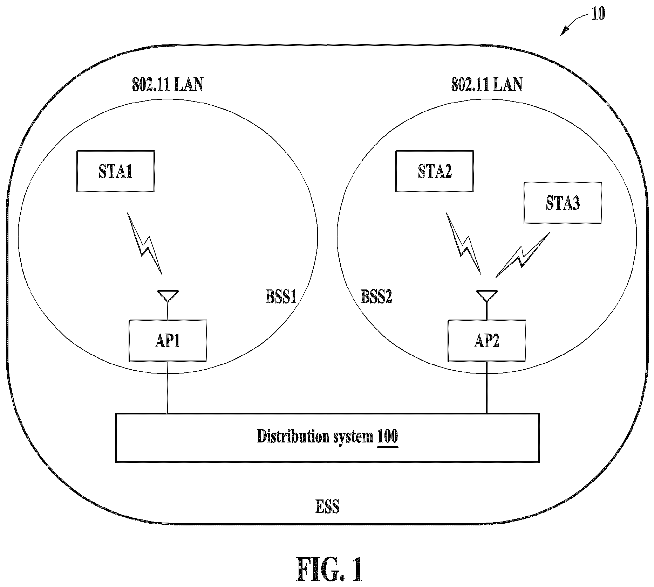

FIG. 1 illustrates an example of a wireless local area network (WLAN) system, according to an embodiment.

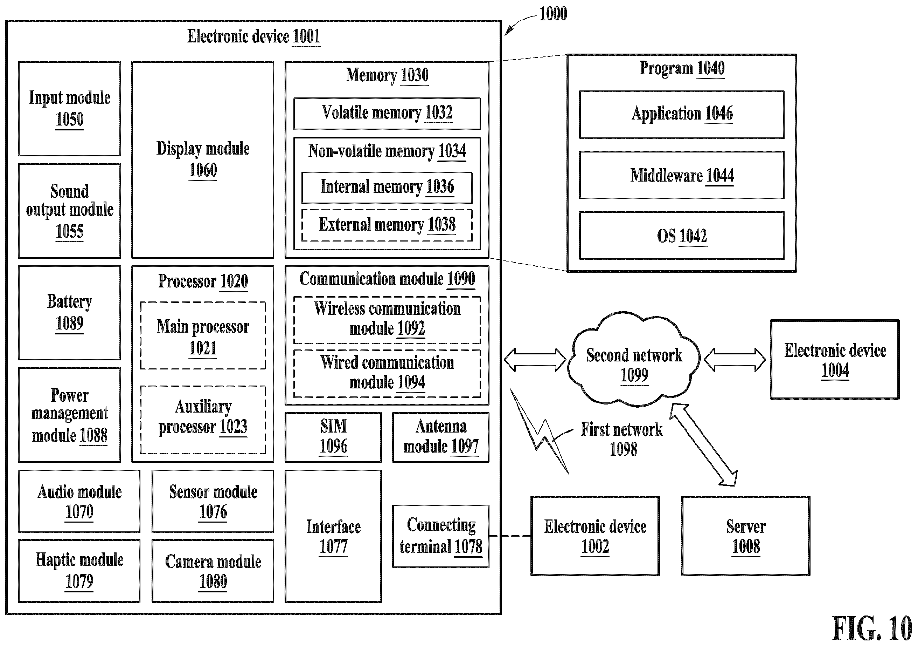

Referring to FIG. 1, according to an embodiment, a WLAN system 10 may represent an infrastructure mode in which an access point (AP) exists in the structure of a WLAN of the Institute of Electrical and Electronic Engineers (IEEE) 802.11. The WLAN system 10 may include one or more basic service sets (BSSs) (e.g., BSS1 and BSS2). The BSSs (BSS1 and BSS2) may refer to a set of APs and STAs (e.g., an electronic device 1001, an electronic device 1002, and an electronic device 1004 of FIG. 10) that may communicate with each other by being synchronized. BSS1 may include AP1 and STA1, and BSS2 may include AP2, STA2, and STA3.

According to an embodiment, the WLAN system 10 may include at least one STA(e.g., STA1 to STA3), a plurality of APs (e.g., AP1 and AP2) providing a distribution service, and a distribution system 100 connecting the plurality of APs (e.g., AP1 and AP2). The distribution system 100 may connect the plurality of BSSs (e.g., BSS1 and BSS2) and implement an extended service set (ESS). The ESS may be used as a term indicating one network in which the plurality of APs (e.g., AP1 and AP2) is connected through the distribution system 100. The plurality of APs (e.g., AP1 and AP2) included in one ESS may have the same service set identification (SSID).

According to an embodiment, the STAs (e.g., STA1 to STA3) may be any functional medium including medium access control (MAC), which follows the IEEE 802.11 standard, and a physical layer interface for wireless media. The STAs (e.g., STA1 to STA3) may be used as a meaning including both an AP and a non-AP STA. The STAs (e.g., STA1 to STA3) may also be referred to as various names, such as electronic devices, mobile terminals, wireless devices, wireless transmit/receive units (WTRUs), user equipment (UE), mobile stations (MS), mobile subscriber units, or just users.

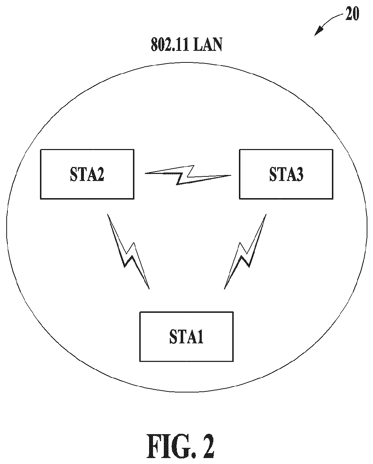

FIG. 2 illustrates another example of a WLAN system, according to an embodiment.

Referring to FIG. 2, according to an embodiment, unlike the WLAN system 10 of FIG. 1, a WLAN system 20 may represent an ad-hoc mode in which communication is performed by establishing a network between the plurality of STAs (e.g., STA1 to STA3) without an AP in the structure of a WLAN of the IEEE 802.11. The WLAN system 20 may include a BSS that operates in an ad-hoc mode, that is, an independent BSS (IBSS).

According to an embodiment, since the IBSS does not include an AP, a centralized management entity performing a centralized management function may not exist. In the IBSS, the STAs may be managed in a distributed manner. In the IBSS, all STAs may be configured as mobile STAs, and access to a distribution system is not allowed, so a self-contained network (or an all-in-one network) may be formed.

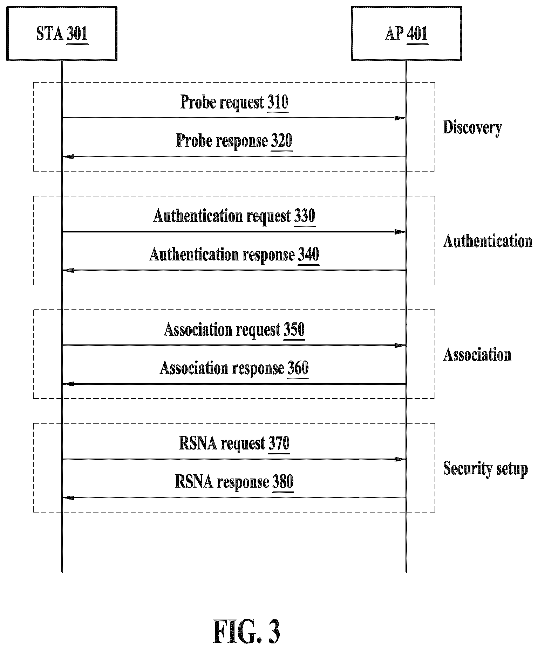

FIG. 3 is a diagram illustrating an example of a link setup operation, according to an embodiment.

Referring to FIG. 3, according to an embodiment, a link setup operation may be performed between devices (e.g., an STA 301 and an AP 401) to communicate with each other. For the link setup, a network may be discovered, authentication may be performed, an association may be established, and a security setting operation may be performed. The link setup operation may be referred to as a session initiation operation or a session setup operation. In addition, the operations of discovery, authentication, association, and security setting of the link setup operation may be collectively referred to as an association operation.

According to an embodiment, the network discovery operation may include operations 310 and 320. In operation 310, the STA 301 (e.g., an electronic device 1001, an electronic device 1002, or an electronic device 1004 of FIG. 10) may transmit a probe request frame to search for which AP exists and wait for a response to the probe request frame. The STA 301 may perform a scanning operation to access a network and find a participable network. The probe request frame may include information of the STA 301 (e.g., a device name and/or address of the STA 301). The scanning operation in operation 310 may refer to an active scanning operation. In operation 320, the AP 401 may transmit a probe response frame to the STA 301, which transmits the probe request frame, in response to the probe request frame. The probe response frame may include information of the AP 401 (e.g., a device name and/or network information of the AP 401). In FIG. 3, although the network discovery operation is illustrated as being performed through active scanning, embodiments are not necessarily limited thereto, and when the STA 301 performs passive scanning, the transmission operation of the probe request frame may be omitted. The STA 301 performing passive scanning may receive a beacon frame transmitted from the AP 401 and perform the following subsequent procedures.

According to an embodiment, after the STA 301 discovers a network, an authentication operation including operations 330 and 340 may be performed. In operation 330, the STA 301 may transmit an authentication request frame to the AP 401. In operation 340, the AP 401 may determine whether to allow authentication for the STA 301 based on information included in the authentication request frame. The AP 401 may provide the result of the authentication processing to the STA 301 through an authentication response frame. The authentication frame used for the authentication request and/or response may correspond to a management frame.

According to an embodiment, the authentication frame may include information about an authentication algorithm number, an authentication transaction sequence number, status code, challenge text, a robust security network (RSN), or a finite cyclic group.

According to an embodiment, after the STA 301 is successfully authenticated, an association operation including operations 350 and 360 may be performed. In operation 350, the STA 301 may transmit an association request frame to the AP 401. In operation 360, the AP 401 may transmit an association response frame to the STA 301 in response to the association request frame.

According to an embodiment, the association request frame and/or the association response frame may include information related to various capabilities. For example, the association request frame may include information related to various capabilities and information about a beacon listen interval, a service set identifier (SSID), a supported rate, a supported channel, an RSN, a mobility domain, a supported operating class, a traffic indication map (TIM) broadcast request, and/or an interworking service capability. For example, the association response frame may include information related to various capabilities and information, such as status code, association ID (AID), a supported rate, an enhanced distributed channel access (EDCA) parameter set, a received channel power indicator (RCPI), a received signal-to-noise indicator (RSNI), a mobility domain, a timeout interval (an association comeback time), overlapping BSS scan parameters, a TIM broadcast response, and/or a quality of service (QoS) map.

According to an embodiment, after the STA 301 is successfully associated with a network, a security setup operation including operations 370 and 380 may be performed. The security setup operation may be performed through an RSN association (RSNA) request and/or response. For example, the security setup operation may include performing a private key setup through 4-way handshaking through an extensible authentication protocol over a LAN (EAPOL) frame. The security setup operation may also be performed according to a security method that is not defined in the IEEE 802.11 standard.

According to an embodiment, a security session may be established between the STA 301 and the AP 401 according to the security setup operation, and the STA 301 and the AP 401 may perform secure data communication.

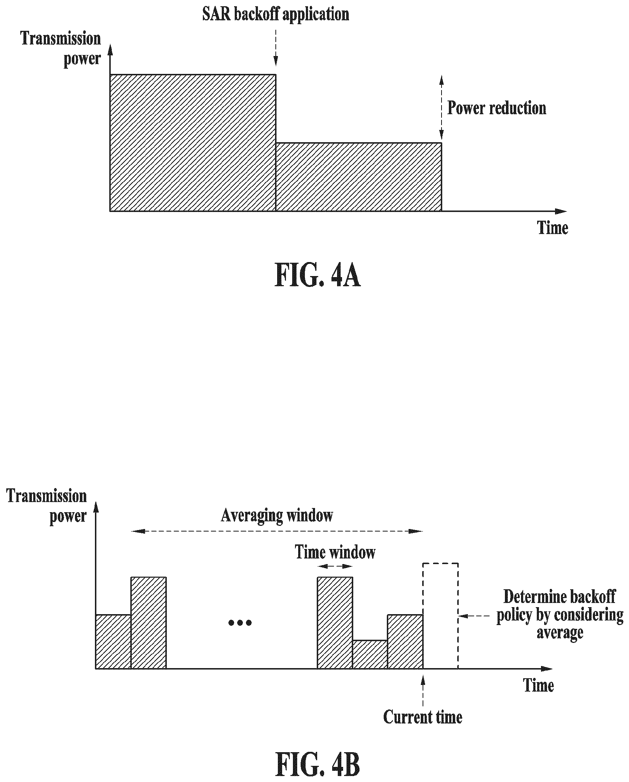

FIGS. 4A and 4B are diagrams illustrating a specific absorption rate (SAR) backoff control method, according to an embodiment.

According to an embodiment, wireless communication may be performed in such a manner that a transmitting end of an electronic device radiates an electromagnetic wave to a wireless medium, and a receiving end of an external device receives the radiated electromagnetic wave. When a person exists in a space where an electromagnetic wave is emitted and received, significant amounts of electromagnetic waves may be absorbed by the human body. Recent studies have reported that an electromagnetic wave absorbed by the human body may have various adverse effects on health. In particular, when the transmitting and receiving end is in close contact with the human body, the electromagnetic wave absorption rate skyrockets, and accordingly, most countries regulate the human body electromagnetic wave absorption rate for smart devices. As most smart devices use a WLAN, the WLAN is also subject to such a regulation. Most countries define the standard for an SAR, which refers to electromagnetic wave energy absorbed by the human body, and it is mandatory for smart devices to satisfy the standard.

According to an embodiment, FIG. 4A shows an example of an SAR backoff control method performed to respond to the regulation related to human body electromagnetic wave absorption. The SAR backoff control method may be a method of controlling transmission power. According to the SAR backoff control method, smart devices may use high transmission power when the smart devices determine that the human body is not close to the smart devices. In addition, the smart devices may reduce transmission power when the smart devices determine that the human body is close to the smart devices.

In an embodiment, various communication processors may be mounted in the smart devices in addition to the WLAN. When a plurality of communication processors is operating simultaneously, the sum of pieces of electromagnetic wave energy radiated from each communication processor (e.g., an antenna associated with a communication processor) may be subject to regulation. Here, the smart devices may reduce transmission power output from each communication processor within the limit of the entire energy budget. As described above, the transmission power may be controlled to satisfy the regulation (e.g., SAR regulation) of the electromagnetic wave energy absorbed by the human body. An example of the SAR backoff control method shown in FIG. 4A may be a method of uniformly applying a power limit to all pieces of transmission at a certain time point (e.g., a time point when the human body is close to a device). The effect of the electromagnetic wave on the human body may need to be calculated in terms of the total amount of energy of the electromagnetic wave exposed for a certain time. The SAR backoff control method shown in FIG. 4A may imply inefficiency. For example, when transmission is hardly performed due to very small traffic, the total amount of electromagnetic waves exposed to the human body may be minimal even when high transmission power is used. Due to the transmission power limitation that does not need to be applied, the user experience may deteriorate.

According to an embodiment, FIG. 4B shows an example of an SAR backoff control method (e.g., a time-averaged SAR (TAS) backoff control method) performed to respond to the regulation related to the human body electromagnetic wave absorption. The TAS backoff control method may be a method of limiting transmission power in terms of the total amount of electromagnetic wave energy radiated during a certain window (e.g., an averaging window). The TAS backoff control method may limit the average transmission power during the averaging window (e.g., 100 seconds or 60 seconds) to a certain value or less. The TAS backoff control method may update a TAS backoff regulation value in a time window unit that is much less than the averaging window to satisfy the electromagnetic wave absorption rate regulation. The averaging window may be a time-rolling averaging window.

According to an embodiment, the TAS backoff control method may calculate, for the transmission performed during the last time window for each time window (or update interval), the sum (e.g., the energy usage during the last time window) of the products of the transmission time and the transmission power. The TAS backoff control method may calculate the energy usage during the averaging window by adding all pieces of energy usage during a time window included in the averaging window. A TAS backoff protocol may control the transmission power of the time window such that an average (e.g., average transmission power) obtained by dividing the energy usage during the averaging window by the size of the averaging window satisfies the regulation.

According to an embodiment, the TAS backoff control method may allocate an energy budget for each time window. The TAS backoff control method may calculate the TAS backoff regulation value (e.g., a transmission power limit) for the time window by dividing the energy budget allocated to the time window by the size of the time window. The TAS backoff control method may not unnecessarily limit the transmission of the next time window even when substantial transmission is not performed during the time window for which high transmission power is set.

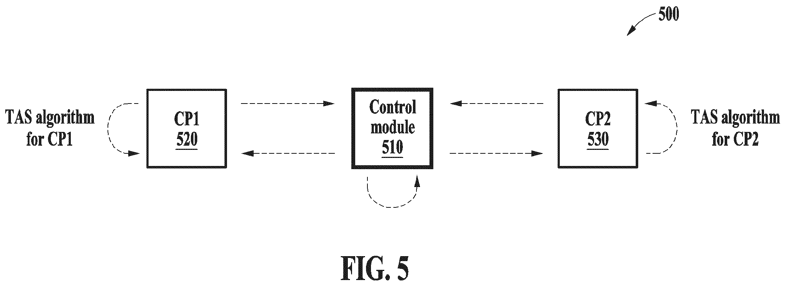

FIG. 5 is a diagram illustrating an example of a TAS backoff control method.

Referring to FIG. 5, an electronic device 500 may include a plurality of communication processors (e.g., a first communication processor 520 and a second communication processor 530). The electronic device 500 may include a control module 510 configured to control the plurality of communication processors. Each communication processor may transmit and receive a wireless signal to provide various functions (or services). Each communication processor (e.g., an antenna associated with a communication processor) may radiate an electromagnetic wave.

As described above with reference to FIGS. 4A and 4B, when the plurality of communication processors is operating simultaneously, the sum of pieces of electromagnetic wave energy radiated from the plurality of communication processors may be subject to regulation. Here, the control module 510 may control the transmission power output from each communication processor within the limit of the total energy budget allocated to the electronic device 500. The electronic device 500 may perform TAS-integrated control on all the communication processors (e.g., the first communication processor 520 and the second communication processor 530).

The control module 510 may allocate an energy budget to each communication processor (e.g., the first communication processor 520 and the second communication processor 530) for each time window (e.g., update interval) of a TAS protocol. Specifically, the control module 510 may accumulate the transmission power and transmission time for the transmission performed by each communication processor during an averaging window. Based on the accumulated values, the control module 510 may calculate the total amount of energy used by the electronic device 500 during the averaging window. Based on the total amount of energy used by the electronic device 500 and the energy budget (e.g., the energy budget allocated during the averaging window) allocated to the electronic device 500, the control module 510 may calculate an energy budget (e.g., an energy budget for a time window) to satisfy the regulation. The control module 510 may allocate the energy budget (e.g., the energy budget for the time window) to each communication processor (e.g., the first communication processor 520 and the second communication processor 530). The energy budget allocated to each of the first communication processor 520 and the second communication processor 530 may differ depending on the type of the communication processor and/or the time point of the allocation. Each communication processor (e.g., the first communication processor 520 and the second communication processor 530) may determine a TAS backoff regulation value for the time window based on the allocated energy budget (e.g., the energy budget for the time window).

For the TAS-integrated control described above, implementation of the control module 510 may be required. The control module 510 may be implemented in a main processor (e.g., an application processor) (e.g., a main processor 1021 of FIG. 10). However, the operation of the control module 510 may need to be performed periodically (e.g., for each time window (e.g., update interval) of the TAS protocol), and the main processor including the control module 510 may need to be maintained in an active state. As described above, there are difficult elements in the implementation of the control module 510.

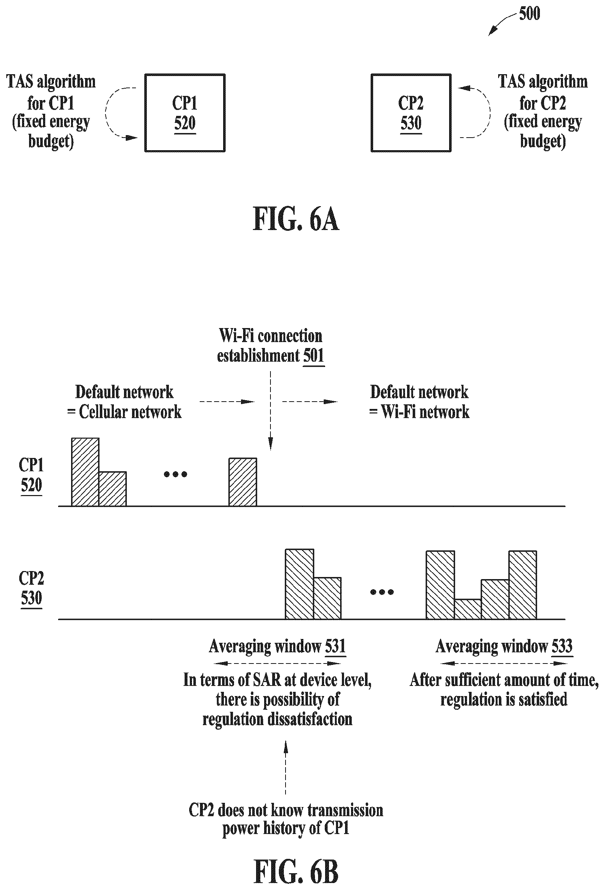

FIGS. 6A and 6B are diagrams illustrating examples of a TAS backoff control method.

Referring to FIG. 6A, the electronic device 500 may include a plurality of communication processors (e.g., the first communication processor 520 and the second communication processor 530). The plurality of communication processors (e.g., the first communication processor 520 and the second communication processor 530) may each perform independent TAS backoff control based on a fixed energy budget. The fixed energy budget is a preset value and may be a value set based on the average usage (e.g., the average usage of each of the communication processors). The plurality of communication processors may each perform TAS backoff control based on the fixed energy budget without a separate information exchange or integrated control. The electronic device 500 may not include a control module to perform TAS-integrated control. The simple structure illustrated in FIG. 6A may be a structure that is easy to implement.

Referring to FIG. 6B, the electronic device 500 performing independent TAS control may not satisfy the electromagnetic wave radiation regulation in a transient period in which a state of a communication processor changes (e.g., a transient period in which an active state and inactive state of a communication processor change) because there is no information exchange between the communication processors. For example, the first communication processor 520 supporting a cellular network (e.g., a communication processor supporting long-term evolution (LTE) communication and/or 5th generation (5G) communication) and the second communication processor 530 supporting a wireless fidelity (Wi-Fi) network may be interrelated communication processors, and only one of the two communication processors may be used. The energy budget of the first communication processor 520 and the energy budget of the second communication processor 530 may be determined based on the characteristics between the complementary communication processors.

At a time point of a state change 501, a connection of the second communication processor 530 may be established. Before the time point of the state change 501, 5G communication (or LTE communication) may be performed by the first communication processor 520. Depending on the communication policy, Wi-Fi communication may be prioritized over 5G communication (or LTE communication). That is, when both a Wi-Fi network and a cellular network (e.g., an LTE network and a 5G network) are activated in the electronic device 500, the Wi-Fi network may be set as a default network. At the time point of the state change 501, the Wi-Fi network may be set as a default network and may be activated. As described above, in the electronic device 500, each communication processor may perform independent TAS control. The second communication processor 530 may not include information about the power transmission performed by the first communication processor 520 before the time point of the activation 501. Accordingly, when the second communication processor 530 performs TAS control using the fixed energy budget, since the second communication processor 530 does not perform transmission before the time point of the state change 501, the transmission may be performed at high power during a transient period (e.g., an averaging window including the time point of the state change 501) including the time point of the state change 501. When the first communication processor 520 performs transmission at high power before the time point of the state change 501, the total electromagnetic wave radiation amount of the electronic device 500 may not satisfy the regulation.

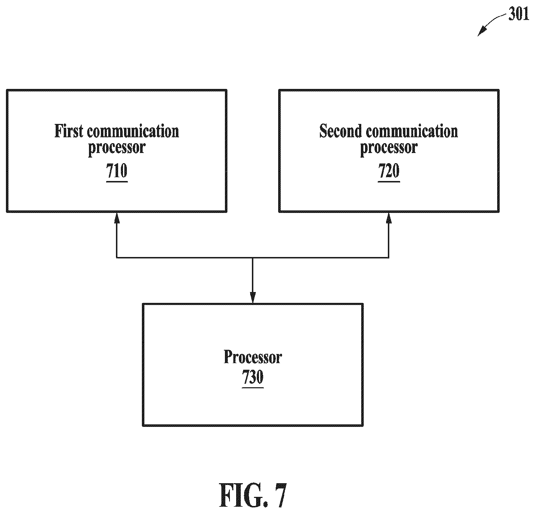

FIG. 7 illustrates an example of a schematic block diagram of an STA, according to an embodiment.

According to an embodiment, the STA 301 may be a device in which each communication processor performs independent TAS control. The STA 301 may perform an information exchange between communication processors only at the time point of a state change of a communication processor. The STA 301 may support stable wireless communication even at the time point of the state change by performing the information exchange only at the time point of the state change of the communication processor. The STA 301 may facilitate hardware implementation by performing independent TAS control by each communication processor without a separate processor for a periodic information exchange between the communication processors.

Referring to FIG. 7, according to an embodiment, the STA 301 may include a plurality of communication processors (e.g., a first communication processor 710 and a second communication processor 720) and a processor 730. The plurality of communication processors may be configured to transmit and receive a wireless signal. For example, the plurality of communication processors may include a Wi-Fi chipset (e.g., a Wi-Fi chipset implemented as a wireless communication module 1092 of FIG. 10) supporting a Wi-Fi network. For example, the communication processors may include a communication processor (e.g., an auxiliary processor 1023 of FIG. 10) supporting a cellular network. The number of communication processors is not limited to two, and the plurality of communication processors may refer to any module supporting a connection service (e.g., Bluetooth and ultra-wideband (UWB)). The processor 730 may be operatively connected to the plurality of communication processors (e.g., the first communication processor 710 and the second communication processor 720). The processor 730 may function as a main processor (e.g., a main processor 1021 of FIG. 10) (e.g., an application processor). Referring to FIG. 7, although the processor 730 and the communication processors 710 and 720 are illustrated as separate modules, embodiments are not limited thereto, and the communication processors 710 and 720 may be included in the processor 730. The STA 301 may correspond to an electronic device described with reference to FIG. 10 (e.g., an electronic device 1001 of FIG. 10). Therefore, a duplicate description to be provided with reference to FIG. 10 is omitted.

According to an embodiment, the STA 301 may obtain a transmission power history of the second communication processor 720 at the time point of a state change of the first communication processor 710. The time point of the state change of the first communication processor 710 may correspond to a time point of turn-on of the first communication processor 710 or a time point of connection establishment of the first communication processor 710. The transmission power history of the second communication processor 720 may include transmission power and a transmission time corresponding to the transmission power. The transmission power history may be information about the transmission previously performed during an averaging window (e.g., 60 seconds or 100 seconds).

According to an embodiment, based on the transmission power history of the second communication processor 720, the STA 301 may determine a transient TAS backoff regulation value of the first communication processor 710 for a time window (e.g., a time window included in the same averaging window as the time point of the state change) associated with the time point of the state change. The STA 301 may substitute the transmission power history of the second communication processor 720 with a transmission power history of the first communication processor 710. The STA301 may calculate the energy usage used by the second communication processor based on the transmission power history of the second communication processor 720. The STA 301 may determine the transient TAS backoff regulation value of the first communication processor 710 for a time window (e.g., a time window included in an averaging window) based on the energy budget allocated to the first communication processor 710 during an averaging window (e.g., an averaging window including the point time of the state change) and the energy usage used by the second communication processor 720 during the averaging window (e.g., the averaging window including the point time of the state change). Since the calculating of the TAS backoff regulation value is described above with reference to FIG. 4B, a detailed description thereof is omitted.

According to an embodiment, the transmission power history of the second communication processor 720 may be obtained as a result of requesting from the first communication processor 710 to the second communication processor 720 at the time point of the state change of the first communication processor 710. That is, the STA 301 may not require a separate control module for TAS-integrated control of the communication processors.

According to an embodiment, the transmission power history of the second communication processor 720 may be provided by the processor 730 at the time point of the state change of the first communication processor 710. That is, the processor 710 may not always need to be activated for TAS-integrated control and may be activated at the time point of the state change of a communication processor.

According to an embodiment, the STA 301 may not use the transmission power history of the second communication processor 720 at the time point that is further spaced apart from the size of the averaging window based on the time point of the state change of the first communication processor 710. The first communication processor 710 may perform independent TAS control based on the fixed energy budget of the first communication processor 710 and the energy usage of the first communication processor 710.

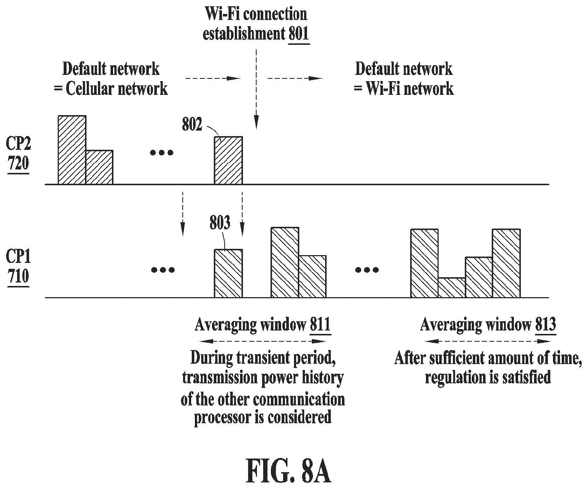

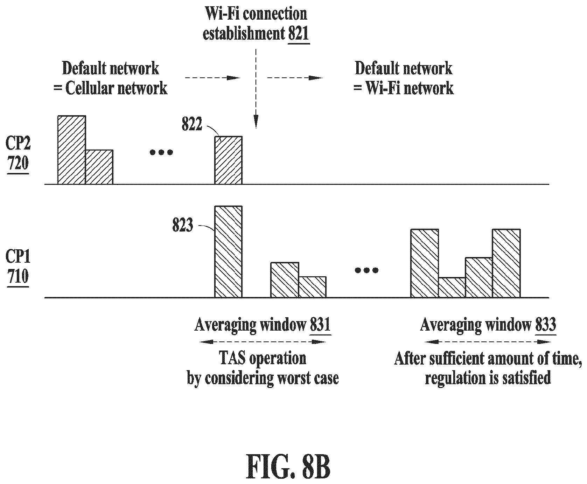

FIGS. 8A and 8B are diagrams illustrating examples of a TAS backoff control method performed by an STA, according to an embodiment.

Referring to FIG. 8A, according to an embodiment, the communication processors (e.g., the first communication processor 710 and the second communication processor 720 of FIG. 7) included in the STA 301 may perform independent TAS control, but the STA301 may perform an information exchange (e.g., a transmission power history) only at the time point of a state change of a communication processor.

According to an embodiment, at a time point of a state change 801, a connection of a Wi-Fi chipset (e.g., the first communication processor 710 of FIG. 7) may be established. Before the time point of the state change 801, 5G communication (or LTE communication) may be performed by a communication processor (e.g., the second communication processor 720 of FIG. 7) supporting a cellular network. Depending on the communication policy, Wi-Fi communication may be prioritized over 5G communication (or LTE communication). At the time point of the state change 801, the Wi-Fi network may be set as a default network and may be activated. As described above, the communication processors (e.g., the first communication processor 710 and the second communication processor 720 of FIG. 7) may perform independent TAS control.

According to an embodiment, the first communication processor 710 may use information (e.g., a transmission power history) about power transmission performed by the second communication processor 720 before the time point of the activation 801. The first communication processor 710 may substitute the transmission power history (e.g., the transmission power and transmission time during a time window 802) of the second communication processor 720 with a transmission power history (e.g., the transmission power and transmission time during a time window 803) of the first communication processor 710. Prior to transmitting and receiving the transmission power history, the first communication processor 710 and the second communication processor 720 may be time-synchronized with each other. The STA 301 may calculate the energy usage (e.g., the energy usage of the second communication processor 720 substituted with the energy usage of the first communication processor 710) used by the second communication processor 720 based on the transmission power history (e.g., the transmission power and the transmission time during the time window 802) of the second communication processor 720. The STA 301 may determine a transient TAS backoff regulation value of the first communication processor 710 for a time window (e.g., a time window included in an averaging window) based on the energy budget allocated to the first communication processor 710 during an averaging window (e.g., an averaging window 811 including the time point of the state change) and the energy usage used by the second communication processor 720 during the averaging window (e.g., the averaging window 811 including the time point of the state change).

According to an embodiment, the STA 301 may not use the transmission power history of the second communication processor 720 at the time point (e.g., the start time point of an averaging window 813) that is further spaced apart from the averaging window based on the time point of the state change 801 of the first communication processor 710. The first communication processor 710 may perform independent TAS control based on the fixed energy budget of the first communication processor 710 and the energy usage of the first communication processor 710.

Referring to FIG. 8B, according to an embodiment, the STA 301 performing independent TAS control may assume the worst case to satisfy the electromagnetic wave radiation regulation at a transient period (e.g., a transient period in which an active state and inactive state of a communication processor change) in which the states of the communication processors 710 and 720 change. The worst case may be an assumption of the maximum electromagnetic wave radiation amount (e.g., a maximum energy usage 823 of the second communication processor 720) of the other communication processor. The STA 301 may set a power limit value by assuming the worst case at a time point of a state change 821. The STA 301 may assume and use the maximum electromagnetic wave radiation amount (e.g., the maximum energy usage 823) of the complementary second communication processor 720. The size of the bar graph shown in FIG. 8B may represent the power transmitted from the communication processors 710 and 720 during a single time window. The area of the bar graph shown in FIG. 8B may represent the energy used by the communication processors 710 and 720 during the single time window. When the transmission power history of the second communication processor 720 is not obtained, the STA 301 may assume and use the maximum energy usage 823 of the second communication processor 720. The STA 301 may determine the transient TAS backoff regulation value of the first communication processor 710 based on the maximum energy usage 823 of the second communication processor 720. The STA 301 may control the transmission power of an antenna associated with the first communication processor 710 based on the transient TAS backoff regulation value during an averaging window 831 associated with the time point of the state change 821.

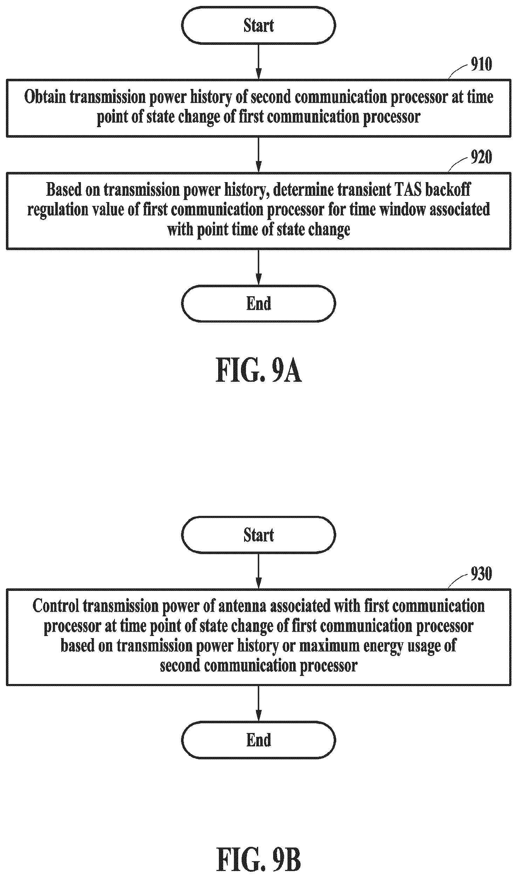

FIGS. 9A and 9B are flowcharts illustrating an operating method of an STA, according to an embodiment.

Referring to FIG. 9A, operations 910 and 920 may be performed sequentially but not necessarily. For example, the order of operations 910 and 920 may be changed, and at least two operations may be performed in parallel.

In operation 910, an STA (e.g., the STA 301 of FIG. 7 and an electronic device 1001 of FIG. 10) may obtain a transmission power history of a second communication processor (e.g., the second communication processor 720 of FIG. 7) at the time point of a state change of a first communication processor (e.g., the first communication processor 710 of FIG. 7). The time point of the state change of the first communication processor 710 may correspond to a time point of turn-on of the first communication processor 710 or a time point of connection establishment of the first communication processor 710. The transmission power history of the second communication processor 720 may include transmission power and a transmission time corresponding to the transmission power. The transmission power history may be information about the transmission previously performed during an averaging window (e.g., 60 seconds or 100 seconds).

**In** operation 920, based on the transmission power history, the STA 301 may determine a transient TAS backoff regulation value for a time window (e.g., a time window included in the same averaging window as the point time of the state change) associated with the point time of the state change. The STA 301 may determine the transient TAS backoff regulation value of the first communication processor 710 for a time window (e.g., a time window included in an averaging window) based on the energy budget allocated to the first communication processor 710 during an averaging window (e.g., an averaging window including the point time of the state change) and the energy usage used by the second communication processor 720 during the averaging window (e.g., the averaging window including the point time of the state change).

Referring to FIG. 9B, in operation 930, the STA 301 may control the transmission power of an antenna associated with the first communication processor 710 at the time point of the state change of the first communication processor 710 based on the transmission power history or the maximum energy usage (e.g., the entire energy budget allocated to the second communication processor 720) of the second communication processor 720. The STA 301 may control the transmission power of the antenna to satisfy the SAR standard.

According to an embodiment, the transmission power history may include transmission power and a transmission time corresponding to the transmission power. The transmission power history may be obtained as a result of requesting from the first communication processor 710 to the second communication processor 720 at the time point of the state change. The transmission power history may also be obtained through the processor 730 at the time point of the state change.

According to an embodiment, the maximum energy usage may be used when the first communication processor 710 fails to obtain the transmission power history of the second communication processor 720. The maximum energy usage may correspond to the entire energy budget allocated to the second communication processor 720. The STA 301 may determine the transient TAS backoff regulation value of the first communication processor 710 based on the maximum energy usage of the second communication processor 720 and the energy budget allocated to the first communication processor 710. The STA 301 may control the transmission power of the antenna based on the transient TAS backoff regulation value during the time window associated with the time point of the state change.

FIG. 10 is a block diagram of an electronic device in a network environment, according to an embodiment.

Referring to FIG. 10, an electronic device 1000 in a network environment 1000 may communicate with an electronic device 1002 via a first network 1098 (e.g., a short-range wireless communication network), or communicate with at least one of an electronic device 1004 and a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, a memory 1030, an input module 1050, a sound output module 1055, a display module 1060, an audio module 1070, and a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In some embodiments, at least one of the components (e.g., the connecting terminal 1078) may be omitted from the electronic device 1001, or one or more other components may be added to the electronic device 1001. In some embodiments, some of the components (e.g., the sensor module 1076, the camera module 1080, or the antenna module 1097) may be integrated as a single component (e.g., the display module 1060).

The processor 1020 may execute, for example, software (e.g., a program 1040) to control at least one other component (e.g., a hardware or software component) of the electronic device 1001 connected to the processor 1020 and may perform various data processing or computations. According to an embodiment, as at least a part of data processing or computations, the processor 1020 may store a command or data received from another component (e.g., the sensor module 1076 or the communication module 1090) in a volatile memory 1032, process the command or the data stored in the volatile memory 1032, and store resulting data in a non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from or in conjunction with the main processor 1021. For example, when the electronic device 1001 includes the main processor 1021 and the auxiliary processor 1023, the auxiliary processor 1023 may be adapted to consume less power than the main processor 1021 or to be specific to a specified function. The auxiliary processor 1023 may be implemented separately from the main processor 1021 or as a part of the main processor 1021.

The auxiliary processor 1023 may control at least some of functions or states related to at least one (e.g., the display module 1060, the sensor module 1076, or the communication module 1090) of the components of the electronic device 1001, instead of the main processor 1021 while the main processor 1021 is in an inactive (e.g., sleep) state or along with the main processor 1021 while the main processor 1021 is an active state (e.g., executing an application). According to an embodiment, the auxiliary processor 1023 (e.g., an ISP or a CP) may be implemented as a portion of another component (e.g., the camera module 1080 or the communication module 1090) that is functionally related to the auxiliary processor 1023. According to an embodiment, the auxiliary processor 1023 (e.g., an NPU) may include a hardware structure specifically for artificial intelligence model processing. An artificial intelligence model may be generated by machine learning. The machine learning may be performed by, for example, the electronic device 1001, in which artificial intelligence is performed, or performed via a separate server (e.g., the server 1008). Learning algorithms may include, but are not limited to, for example, supervised learning, unsupervised learning, semi-supervised learning, or reinforcement learning. The artificial intelligence (AI) model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 1030 may store various pieces of data used by at least one component (e.g., the processor 1020 or the sensor module 1076) of the electronic device 1001. The various pieces of data may include, for example, software (e.g., the program 1040) and input data or output data for a command related thereto. The memory 1030 may include the volatile memory 1032 or the non-volatile memory 1034.

The program 1040 may be stored as software in the memory 1030 and may include, for example, an operating system (OS) 1042, middleware 1044, or an application 1046.

The input module 1050 may receive, from outside (e.g., a user) the electronic device 1001, a command or data to be used by another component (e.g., the processor 1020) of the electronic device 1001. The input module 1050 may include, for example, a microphone, a mouse, a keyboard, a key (e.g., a button), or a digital pen (e.g., a stylus pen).

The sound output module 1055 may output a sound signal to the outside of the electronic device 1001. The sound output module 1055 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 1060 may visually provide information to the outside (e.g., a user) of the electronic device 1001. The display module 1060 may include, for example, a control circuit for controlling a display, a hologram device, or a projector and control circuitry to control its corresponding one of the display, the hologram device, and the projector. According to an embodiment, the display module 1060 may include a touch sensor adapted to detect a touch, or a pressure sensor adapted to measure the intensity of force of the touch.

The audio module 1070 may convert sound into an electric signal or vice versa. According to an embodiment, the audio module 1070 may obtain the sound via the input module 1050 or output the sound via the sound output module 1055 or an external electronic device (e.g., the electronic device 1002, such as a speaker or headphones) directly or wirelessly connected to the electronic device 1001.

The sensor module 1076 may detect an operational state (e.g., power or temperature) of the electronic device 1001 or an environmental state (e.g., a state of a user) external to the electronic device 1001 and generate an electric signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used by the electronic device 1001 to couple with the external electronic device (e.g., the electronic device 1002) directly (e.g., by wire) or wirelessly. According to an embodiment, the interface 1077 may include, for example, a high-definition multimedia interface (HDMI), a universal serial bus (USB) interface, a secure digital (SD) card interface, or an audio interface.

The connecting terminal 1078 may include a connector via which the electronic device 1001 may physically connect to an external electronic device (e.g., the electronic device 1002). According to an embodiment, the connecting terminal 1078 may include, for example, an HDMI connector, a USB connector, an SD card connector, or an audio connector (e.g., a headphones connector).

The haptic module 1079 may convert an electric signal into a mechanical stimulus (e.g., a vibration or a movement) or an electrical stimulus, which may be recognized by a user via their tactile sensation or kinesthetic sensation. According to an embodiment, the haptic module 1079 may include, for example, a motor, a piezoelectric element, or an electric stimulator.

The camera module 1080 may capture a still image and moving images. According to an embodiment, the camera module 1080 may include one or more lenses, image sensors, ISPs, and flashes.

The power management module 1088 may manage power supplied to the electronic device 1001. According to an embodiment, the power management module 1088 may be implemented as, for example, at least a part of a power management integrated circuit (PMIC).

The battery 1089 may supply power to at least one component of the electronic device 1001. According to an embodiment, the battery 1089 may include, for example, a primary cell, which is not rechargeable, a secondary cell, which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more CPs that are operable independently from the processor 1020 (e.g., an AP) and that support direct (e.g., wired) communication or wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module, or a power line communication (PLC) module). A corresponding one of these communication modules may communicate with the external electronic device, for example, the electronic device 1004, via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the SIM 1096.

The wireless communication module 1092 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., a mmWave band) to achieve, e.g., a high data transmission rate. The wireless communication module 1092 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element including a conductive material or a conductive pattern formed in or on a substrate (e.g., a printed circuit board (PCB)). According to an embodiment, the antenna module 1097 may include a plurality of antennas (e.g., an antenna array). In such a case, at least one antenna appropriate for a communication scheme used in a communication network, such as the first network 1098 or the second network 1099, may be selected by, for example, the communication module 1090 from the plurality of antennas. The signal or power may be transmitted or received between the communication module 1090 and the external electronic device via the at least one selected antenna. According to an embodiment, another component (e.g., a radio frequency integrated circuit (RFIC)) other than the radiating element may be additionally formed as a part of the antenna module 1097.

According to various embodiments, the antenna module 1097 may form a mmWave antenna module. According to an embodiment, the mm Wave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device (e.g., the electronic device 1004) via the server 1008 coupled with the second network 1099. Each of the external electronic devices (e.g., the electronic device 1002 or 1004) may be a device of the same type as or a different type from the electronic device 1001. According to an embodiment, all or some of operations to be executed by the electronic device 1001 may be executed by one or more external electronic devices (e.g., the electronic devices 1002 and 1004 and the server 1008). For example, if the electronic device 1001 needs to perform a function or a service automatically, or in response to a request from a user or another device, the electronic device 1001, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 1001. The electronic device 1001 may provide the result, with or without further processing the result, as at least part of a response to the request. To that end, cloud computing, distributed computing, mobile edge computing (MEC), or client-server computing technology may be used, for example. The electronic device 1001 may provide ultra low-latency services using, e.g., distributed computing or MEC. In an embodiment, the external electronic device (e.g., the electronic device 1004) may include an Internet-of-things (IoT) device. The server 1008 may be an intelligent server using machine learning and/or a neural network. According to an embodiment, the external electronic device (e.g., the electronic device 1004) or the server 1008 may be included in the second network 1099. The electronic device 1001 may be applied to intelligent services (e.g., a smart home, a smart city, a smart car, or healthcare) based on 5G communication technology or IoT-related technology.

The electronic device according to the embodiments disclosed herein may be one of various types of electronic devices. The electronic device may include, for example, a portable communication device (e.g., a smart phone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. Terms, such as "first" or "second", are simply used to distinguish a component from another component and do not limit the components in other aspects (e.g., importance or sequence). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more of functions. For example, according to an embodiment, the module may be implemented in a form of an application-specific integrated circuit (ASIC).

Embodiments as set forth herein may be implemented as software (e.g., the program 1040) including one or more instructions that are stored in a storage medium (e.g., an internal memory 1036 or an external memory 1038) that is readable by a machine (e.g., the electronic device 1001). For example, a processor (e.g., the processor 1020) of the nearby device (e.g., the electronic device 1001) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStoreTM), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. **In** such a case, according to various embodiments, the integrated component may still perform one or more of functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

According to an embodiment, an electronic device (e.g., the STA 301 of FIG. 7 and the electronic device 1001 of FIG. 10) may include a plurality of communication processors including a first communication processor (e.g., the first communication processor 710 of FIG. 7) and a second communication processor (e.g., the second communication processor 720 of FIG. 7) and configured to transmit and receive a wireless signal and a processor (e.g., the processor 730 of FIG. 7 and the processor 1020 of FIG. 10) operatively connected to the plurality of communication processors, in which the electronic device may be configured to perform a plurality of operations, in which the plurality of operations may include obtaining a transmission power history of the second communication processor at a time point of a state change of the first communication processor. The plurality of operations may include determining, based on the transmission power history, a transient TAS backoff regulation value of the first communication processor for a time window associated with the time point of the state change.

According to an embodiment, the time point of the state change of the first communication processor may correspond to a time point of turn-on of the first communication processor or a time point of connection establishment of the first communication processor.

According to an embodiment, the transmission power history may include transmission power and a transmission time corresponding to the transmission power.

According to an embodiment, the plurality of communication processors may be time-synchronized with each other.

According to an embodiment, the transient TAS backoff regulation value may be determined as a result of substituting the transmission power history of the second communication processor with a transmission power history of the first communication processor.

According to an embodiment, the transient TAS backoff regulation value may be determined based on an energy budget allocated to the first communication processor and energy usage used by the second communication processor. The energy usage may be calculated based on the transmission power history.

According to an embodiment, the determining may include determining the transient TAS backoff regulation value for the time window based on the energy budget allocated to the first communication processor during an averaging window, which includes the time point of the state change, and the energy usage used by the second communication processor during the averaging window. The time window may be included in the averaging window.

According to an embodiment, the plurality of operations may further include determining a TAS backoff regulation value based on the energy budget allocated to the first communication processor during an averaging window, which does not comprise the time point of the state change, and the energy usage used by the first communication processor during the averaging window.

According to an embodiment, the transmission power history may be obtained as a result of requesting from the first communication processor to the second communication processor at the time point of the state change.

According to an embodiment, the transmission power history may be obtained through the processor at the time point of the state change.

According to an embodiment, an electronic device (e.g., the STA 301 of FIG. 7 and the electronic device 1001 of FIG. 10) may include a plurality of communication processors including a first communication processor (e.g., the first communication processor 710 of FIG. 7) and a second communication processor (e.g., the second communication processor 720 of FIG. 7) and configured to transmit and receive a wireless signal and a processor (e.g., the processor 730 of FIG. 7 and the processor 1020 of FIG. 10) operatively connected to the plurality of communication processors, in which the electronic device may be configured to perform a plurality of operations, in which the plurality of operations may include controlling transmission power of an antenna associated with the first communication processor 710 at a time point of a state change of the first communication processor 710, based on a transmission power history or maximum energy usage of the second communication processor 720. The electronic device may be configured to control the transmission power of the antenna to satisfy an SAR standard.

According to an embodiment, the time point of the state change of the first communication processor may correspond to a time point of turning-on of the first communication processor or a time point of connection establishment of the first communication processor.

According to an embodiment, the transmission power history may include transmission power and a transmission time corresponding to the transmission power.

According to an embodiment, the transmission power history may be obtained as a result of requesting from the first communication processor to the second communication processor at the time point of the state change
According to an embodiment, the transmission power history may be obtained through the processor at the time point of the state change.

According to an embodiment, the maximum energy usage may correspond to the entire energy budget allocated to the second communication processor.

According to an embodiment, the maximum energy usage may be used when the first communication processor fails to obtain the transmission power history.

According to an embodiment, the plurality of communication processors may be time-synchronized with each other.

According to an embodiment, the controlling may include calculating energy usage of the second communication processor 720 based on the transmission power history of the second communication processor 720. The controlling may include determining a transient TAS backoff regulation value of the first communication processor 710, based on the energy usage and an energy budget allocated to the first communication processor 710. The controlling may include controlling the transmission power of the antenna based on the transient TAS backoff regulation value during a time window associated with the time point of the state change.

According to an embodiment, the controlling may include
determining the transient TAS backoff regulation value of the first communication processor 710 based on the maximum energy usage of the second communication processor 720 and the energy budget allocated to the first communication processor 710. The controlling may include controlling the transmission power of the antenna based on the transient TAS backoff regulation value during the time window associated with the time point of the state change.

## Claims

1. An electronic device 301, 1001 comprising:
a plurality of communication processors comprising a first communication processor 710 and a second communication processor 720 and configured to transmit and receive a wireless signal; and
a processor 730, 1020 operatively connected to the plurality of communication processors,
wherein the electronic device 301, 1001 is configured to perform a plurality of operations,
wherein the plurality of operations comprises:
obtaining a transmission power history of the second communication processor 720 at a time point of a state change of the first communication processor 710; and
determining, based on the transmission power history, a transient time-averaged specific absorption rate (SAR) (TAS) backoff regulation value of the first communication processor 710 for a time window associated with the time point of the state change.

2. The electronic device 301, 1001 of claim 1, wherein the time point of the state change of the first communication processor 710 corresponds to a time point of turning-on of the first communication processor 710 or a time point of connection establishment of the first communication processor 710.

3. The electronic device 301, 1001 of one of claims 1 and 2, wherein the transmission power history comprises transmission power and a transmission time corresponding to the transmission power.

4. The electronic device 301, 1001 of one of claims 1 to 3, wherein the plurality of communication processors is time-synchronized with each other.

5. The electronic device 301, 1001 of one of claims 1 to 4, wherein the transient TAS backoff regulation value is determined as a result of substituting the transmission power history of the second communication processor 720 with a transmission power history of the first communication processor 710.

6. The electronic device 301, 1001 of one of claims 1 to 5, wherein the transient TAS backoff regulation value is determined based on an energy budget allocated to the first communication processor 710 and energy usage used by the second communication processor 720,
wherein the energy usage is calculated based on the transmission power history.

7. The electronic device 301, 1001 of one of claims 1 to 6, wherein the determining comprises determining the transient TAS backoff regulation value for the time window based on the energy budget allocated to the first communication processor 710 during an averaging window, which comprises the time point of the state change, and the energy usage used by the second communication processor 720 during the averaging window,
wherein the time window is comprised in the averaging window.

8. The electronic device 301, 1001 of one of claims 1 to 7, wherein the plurality of operations further comprises determining a TAS backoff regulation value based on the energy budget allocated to the first communication processor 710 during an averaging window, which does not comprise the time point of the state change, and the energy usage used by the first communication processor 710 during the averaging window.

9. The electronic device 301, 1001 of one of claims 1 to 8, wherein the transmission power history is obtained as a result of requesting from the first communication processor 710 to the second communication processor 720 at the time point of the state change.

10. The electronic device 301, 1001 of one of claims 1 to 9, wherein the transmission power history is obtained through the processor 730, 1020 at the time point of the state change.

11. An electronic device 301, 1001 comprising:
a plurality of communication processors comprising a first communication processor 710 and a second communication processor 720 and configured to transmit and receive a wireless signal; and
a processor 730, 1020 operatively connected to the plurality of communication processors,
wherein the electronic device 301, 1001 is configured to perform a plurality of operations,
wherein the plurality of operations comprises controlling transmission power of an antenna associated with the first communication processor 710 at a time point of a state change of the first communication processor 710, based on a transmission power history or maximum energy usage of the second communication processor 720,
wherein the electronic device 301, 1001 is configured to control the transmission power of the antenna to satisfy a specific absorption rate (SAR) standard.

12. The electronic device 301, 1001 of claim 11, wherein the maximum energy usage corresponds to an entire energy budget allocated to the second communication processor 720.

13. The electronic device 301, 1001 of one of claims 11 and 12, wherein the maximum energy usage is used when the first communication processor 710 fails to obtain the transmission power history.

14. The electronic device 301, 1001 of one of claims 11 to 13, wherein the controlling comprises:
calculating energy usage of the second communication processor 720 based on the transmission power history of the second communication processor 720;
determining a transient time-averaged SAR (TAS) backoff regulation value of the first communication processor 710, based on the energy usage and an energy budget allocated to the first communication processor 710; and
controlling the transmission power of the antenna based on the transient TAS backoff regulation value during a time window associated with the time point of the state change.

15. The electronic device 301, 1001 of one of claims 11 to 14, wherein the controlling comprises:
determining the transient TAS backoff regulation value of the first communication processor 710 based on the maximum energy usage of the second communication processor 720 and the energy budget allocated to the first communication processor 710; and
controlling the transmission power of the antenna based on the transient TAS backoff regulation value during the time window associated with the time point of the state change.
